(19)

Europäisches Patentamt
European Patent Office
Office européen des brevets

(11)  **EP 4 070 953 A1**

(12)  # EUROPEAN PATENT APPLICATION
published in accordance with Art. 153(4) EPC

(43) Date of publication:
**12.10.2022 Bulletin 2022/41**

(21) Application number: **20894998.2**

(22) Date of filing: **03.12.2020**

(51) International Patent Classification (IPC):
**B32B 27/18** (2006.01)     **B32B 27/32** (2006.01)
**C08K 5/20** (2006.01)     **C08L 23/00** (2006.01)

(52) Cooperative Patent Classification (CPC):
**B32B 27/18; B32B 27/32; C08K 5/20; C08L 23/00**

(86) International application number:
**PCT/JP2020/044993**

(87) International publication number:
**WO 2021/112165 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **05.12.2019   JP 2019220206**

(71) Applicant: **Mitsui Chemicals, Inc.**
**Tokyo 105-7122 (JP)**

(72) Inventors:
• **OMURA, Kazuhiro**
 **Sodegaura-shi, Chiba 299-0265 (JP)**
• **TAMURA, Takuya**
 **Sodegaura-shi, Chiba 299-0265 (JP)**
• **KUSUMOTO, Masaya**
 **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54)  **AQUEOUS DISPERSION AND LAYERED BODY**

(57)  An object of the present invention is to provide an aqueous dispersion with which a coating film having small dynamic frictional resistance can be formed immediately after coating. The present invention includes an aqueous dispersion containing a polyolefin (A), an unsaturated carboxylic acid polymer (B), an amide-based wax (C), and water.

FIG. 1

EP 4 070 953 A1

**Description**

Technical Field

The present invention relates to an aqueous dispersion and a laminate, and specifically to an aqueous dispersion and a laminate obtained using the aqueous dispersion.

Background Art

Heretofore, in various industrial fields, it is known that substrates such as a plastic film, a vapor deposition film, a metal foil, paper, and nonwoven fabric or a substrate and another adherend are bonded to each other by heat and pressure (that is, are heat-sealed). In heat sealing, a method of directly bonding substrates or a substrate and an adherend to each other has been usually used, but in order to improve heat sealability between the substrate and the adherend, a method has also been used in which a heat sealing agent (adhesive) layer is formed in advance on a substrate, and the substrates or the substrate and another adherend are bonded to each other with the adhesive layer interposed therebetween.

As an adhesive used for such heat sealing, for example, an aqueous dispersion has been proposed that contains a resin component and water, and contains, as the resin component, an ethylene-unsaturated carboxylic acid copolymer, a polymer having an acrylic acid ester unit as a polymerization unit, and an ethylene-vinyl acetate-based copolymer, and a laminate in which this aqueous dispersion is applied to a substrate and dried to form a coating film on the substrate surface has also been proposed (see, for example, Patent Literature 1).

Citation List

Patent Literature

Patent Literature 1: WO 2018/142997 A

Summary of Invention

Technical Problem

The coating film (heat sealing agent) formed on the surface of the substrate is required to have a small dynamic friction coefficient of the surface from the viewpoint of ease of conveyance of the laminate in a workplace or improvement in filling efficiency of contents. It is also desired that the coating film has a small dynamic friction coefficient immediately after formation of the coating film.

That is, an object of the present invention is to provide an aqueous dispersion with which a coating film having small dynamic frictional resistance can be formed immediately after coating and to provide a laminate including a substrate and a coating film having small dynamic frictional resistance.

Solution to Problem

The present invention relates to [1] to [7] described below.

[1] An aqueous dispersion containing a polyolefin (A), an unsaturated carboxylic acid polymer (B), an amide-based wax (C), and water.

[2] The aqueous dispersion described in the above [1], in which a concentration of the amide-based wax (C) is 0.15 to 3.0 parts by mass with respect to 100 parts by mass of the component (A) + the component (B) of the aqueous dispersion.

[3] The aqueous dispersion described in the above [1] or [2], in which the unsaturated carboxylic acid polymer (B) is at least one selected from the group consisting of an ethylene-unsaturated carboxylic acid copolymer (b1) and/or a salt thereof (B1), and a (meth)acrylic acid ester polymer (B2) .

[4] The aqueous dispersion described in any one of the above [1] to [3], in which the unsaturated carboxylic acid polymer (B) is composite particles containing the ethylene-unsaturated carboxylic acid copolymer (b1) and/or the salt thereof (B1) and the acrylic acid ester polymer (B2).

[5] A laminate including a substrate, and an adhesive layer laminated on at least a part of at least a surface of the substrate, in which the adhesive layer is formed of a dried product of the aqueous dispersion described in any one of the above [1] to [4].

[6] The laminate described in the above [5], further including an adherend layer laminated on a surface of the adhesive layer opposite to the substrate side.

[7] The laminate described in the above [5] or [6], in which the substrate is formed of aluminum.

Advantageous Effects of Invention

According to the aqueous dispersion of the present invention, it is possible to form a coating film having small dynamic frictional resistance immediately after coating the substrate with the aqueous dispersion. The dynamic frictional resistance of the coating film of the laminate of the present invention is small.

Brief Description of Drawings

Fig. 1 shows a relation between an addition amount of wax to an aqueous dispersion in each of Example 1 and Comparative Example 1 and a dynamic friction coefficient of a coating film formed from the aqueous dispersion.

Fig. 2 shows a relation between a duration of standing after coating with an aqueous dispersion in each of Examples 1 and 2 and Comparative Example 2 and a dynamic friction coefficient of a coating film formed from the aqueous dispersion.

Fig. 3 shows a relation between a duration of standing after coating with an aqueous dispersion in each of Examples 1 and 2 and Comparative Example 2 and a retention rate of a dynamic friction coefficient of a coating film formed from the aqueous dispersion.

Description of Embodiments

Hereinafter, the present invention will be more specifically described.

[Aqueous Dispersion]

An aqueous dispersion according to the present invention contains a polyolefin (A), an unsaturated carboxylic acid polymer (B), an amide-based wax (C), and water.

<Polyolefin (A)>

The polyolefin (A) is a homopolymer of olefin, a copolymer of two or more kinds of olefins, or a copolymer of olefin and diene.

Examples of the polyolefin (A) include

polyethylenes such as a low-density polyethylene and a high-density polyethylene, propylene, poly 1-butene, poly 3-methyl-1-butene, poly 4-methyl-1-pentene, poly 3-methyl-1-pentene, homopolymers or copolymers of $\alpha$-olefins having 2 to 12 carbon atoms such as ethylene, propylene, 1-butene, 3-methyl-1-butene, 4-methyl-1-pentene, 3-methyl-1-pentene, 1-heptene, 1-hexene, 1-decene, and 1-dodecene, typified by an ethylene-1-hexene copolymer and a propylene-1-butene copolymer such as an ethylene-propylene copolymer, an ethylene-1-butene copolymer, and linear low-density polyethylene (1-LDPE), and

copolymers of $\alpha$-olefins and conjugated diene or unconjugated diene, typified by an ethylene-butadiene copolymer, an ethylene-ethylidene norbornene copolymer, an ethylene-propylene-butadiene terpolymer, an ethylene-propylene-dicyclopentadiene terpolymer, and an ethylene-propylene-1,5-hexadiene terpolymer.

From the viewpoint of increasing the retention rate of the dynamic friction coefficient, as a preferred embodiment, the polyolefin-based polymer (A) contains a homopolymer of ethylene having a density of 900 kg/m$^3$ or more and 940 kg/m$^3$ or less or an ethylene-based polymer (A1) that is a copolymer of ethylene and $\alpha$-olefin mainly including ethylene.

The density of the ethylene-based polymer (A1) is preferably 900 kg/m$^3$ or more and 935 kg/m$^3$ or less.

The melting point of the ethylene-based polymer (A1) as measured by differential scanning calorimetry (DSC) under the following conditions is preferably 95°C or higher and 140°C or lower, and more preferably 95°C or higher and 130°C or lower.

[DSC measurement conditions] Using a differential scanning calorimeter, about 5.0 mg of a sample is heated from 30°C to 200°C at a temperature increasing rate of 10°C/min in a nitrogen atmosphere, and held at this temperature for 10 minutes. The sample is cooled to 30°C at a temperature decreasing rate of 10°C/min, held at this temperature for 5 minutes, and then heated to 200°C at a temperature increasing rate of 10°C/min. An endothermic peak observed at the second temperature rising is defined as a melting peak, and a temperature at which the melting peak appears is defined as a melting point. When the melting peak is multimodal, a temperature at which the melting peak on the highest temperature side appears is defined as the melting point.

Examples of the α-olefin in the ethylene-α-olefin copolymer that may be the ethylene-based polymer (A1) include α-olefins having 3 to 12 carbon atoms such as propylene, 1-butene, 3-methyl-1-butene, 4-methyl-1-pentene, 3-methyl-1-pentene, 1-heptene, 1-hexene, 1-decene, and 1-dodecene. Among these α-olefins, 1-hexene is preferred. The content ratio (mol%) of the structural unit derived from α-olefin in the ethylene-α-olefincopolymer is preferably in a range of 0.01 to 10 mol%.

A method for producing the ethylene-based polymer (A1) is not particularly limited as long as the ethylene-based polymer (A1) is a polymer satisfying the above-described desired physical properties.

Specific examples of the ethylene-based polymer (A1) include a low-density polyethylene and a linear low-density polyethylene.

From the viewpoint of improving the low-temperature heat sealability of the laminate of the present invention, as a preferred embodiment, an ethylene-α-olefin copolymer (A2) having a density of 860 kg/m$^3$ or more and 895 kg/m$^3$ or less is contained as the polyolefin-based polymer (A).

The density of the ethylene-α-olefincopolymer (A2) is preferably 890 kg/m$^3$ or less and more preferably 880 kg/m$^3$ or less. The density of the ethylene-α-olefin copolymer (A2) is preferably 865 kg/m$^3$ or more.

The melting point of the ethylene-α-olefin copolymer (A2) as measured by DSC is usually 80°C or lower and preferably 70°C or lower. In the present invention, "°C or lower" means that a polymer having no melting point is also included as described below. The DSC means a melting point measured by DSC under the conditions described in the section of the ethylene-based polymer (A1).

The ethylene-α-olefin copolymer (A2) may be amorphous, that is, may have no melting point, or may have a melting point of 40°C or higher or 50°C or higher.

Examples of the α-olefin constituting the ethylene-α-olefin copolymer (A2) include α-olefins having 3 to 12 carbon atoms such as propylene, 1-butene, 3-methyl-1-butene, 4-methyl-1-pentene, 3-methyl-1-pentene, 1-heptene, 1-hexene, 1-decene, and 1-dodecene. Among these α-olefins, 1-butene is preferred.

The content ratio (mol%) of the structural unit derived from α-olefin in the ethylene-α-olefin copolymer (A2) is preferably in a range of 5 to 50 mol%.

From the viewpoint of further enhancing heat sealability while increasing the retention rate of the dynamic friction coefficient, as a preferred embodiment, the ethylene-based polymer (A1) and the ethylene-α-olefin copolymer (A2) are included as the polyolefin (A). Examples of combinations of the ethylene-based polymer (A1) and the ethylene-α-olefin copolymer (A2) include a low-density polyethylene and an ethylene-butene copolymer, and a linear low-density polyethylene and an ethylene-butene copolymer.

From the viewpoint of achieving both improvement in the retention rate of the dynamic friction coefficient and improvement in the heat sealability, the mass ratio [(Al)/(A2)] of the ethylene-based polymer (A1) and the ethylene-α-olefin copolymer (A2) is preferably 90/10 to 10/90 and more preferably 80/20 to 20/80.

These polyolefins may be used singly or in combination of two or more kinds thereof.

<Unsaturated Carboxylic Acid Polymer (B)>

The unsaturated carboxylic acid polymer (B) is a polymer containing, as a structural unit, an unsaturated carboxylic acid or an unsaturated carboxylic acid derivative, such as ester and an acid anhydride, and/or a salt thereof.

Examples of the unsaturated carboxylic acid polymer (B) include an ethylene-unsaturated carboxylic acid copolymer (b1) that is a copolymer of ethylene and an unsaturated carboxylic acid and/or a salt thereof (B1), and a (meth)acrylic acid ester polymer (B2) that is an unsaturated carboxylic acid derivative.

<Ethylene-Unsaturated Carboxylic Acid Copolymer (b1) and/or Salt thereof (B1) >

The ethylene-unsaturated carboxylic acid copolymer (b1) is a copolymer of ethylene and an unsaturated carboxylic acid.

The unsaturated carboxylic acid is a monomer having at least one ethylenically unsaturated bond and a carboxy group in one molecule, and examples thereof include monobasic acids such as acrylic acid, methacrylic acid, and crotonic acid, and dibasic acids such as maleic acid, fumaric acid, and itaconic acid.

These unsaturated carboxylic acids may be used singly or in combination of two or more kinds thereof.

From the viewpoint of water resistance, examples of the unsaturated carboxylic acid preferably include monobasic acids and more preferably include acrylic acid and methacrylic acid.

Regarding the content ratio of the structural unit derived from ethylene (hereinafter, also referred to as "ethylene unit") and the structural unit derived from unsaturated carboxylic acid (hereinafter, also referred to as "unsaturated carboxylic acid unit") in the ethylene-unsaturated carboxylic acid copolymer (b1), the ethylene unit is, for example, 75% by mass or more and preferably 78% by mass or more, and is, for example, 90% by mass or less and preferably 88% by mass or less, with respect to the total amount of these structural units. The unsaturated carboxylic acid unit is, for example, 10% by mass or more and preferably 12% by mass or more, and is, for example, 25% by mass or less and preferably 22% by mass or less.

When the content ratio of the ethylene unit and the unsaturated carboxylic acid unit in the ethylene-unsaturated carboxylic acid copolymer (b1) is in the above range, a coating film formed from the aqueous dispersion can exhibit excellent adhesion strength and blocking resistance.

A polymerization method of ethylene and an unsaturated carboxylic acid is not particularly limited, and a known polymerization method can be employed. Examples of the polymerization method include a method in which ethylene, an unsaturated carboxylic acid, and a known polymerization initiator such as a peroxide are brought into contact with each other under high-temperature and high-pressure conditions.

The ethylene-unsaturated carboxylic acid copolymer (b1) can be obtained as a dispersion (aqueous dispersion) in which single particles (hereinafter, resin particles (I)) thereof are dispersed in water. In such a case, for example, polymerization can be performed by the methods described, for example, in JP H7-008933 B, JP H5-039975 B, JP H4-030970 B, JP S42-000275 B, JP S42-023085 B, JP S45-029909 B, and JP S51-062890 A. The ethylene-unsaturated carboxylic acid copolymer (b1) has self-emulsifying properties.

In the production of the ethylene-unsaturated carboxylic acid copolymer (b1), from the viewpoint of improving production stability, as necessary, an emulsifier (surfactant) described below can be blended. The blending ratio of the emulsifier is appropriately set.

In the production of the ethylene-unsaturated carboxylic acid copolymer (b1), from the viewpoint of improving production stability, for example, known additives such as a pH adjusting agent, metal ion sealing agents such as ethylenediaminetetraacetic acid and a salt thereof, and molecular weight regulators (chain transfer agents) such as mercaptans and low-molecular-weight halogen compounds can be blended at an appropriate ratio.

From the viewpoint of improving dispersion stability and the printability of the laminate (described below), as the ethylene-unsaturated carboxylic acid copolymer (b1) and/or the salt thereof (B1), the salt (B1) of the ethylene-unsaturated carboxylic acid copolymer (b1) is preferred.

The salt (B1) of the ethylene-unsaturated carboxylic acid copolymer (b1) can be prepared by adding a base, for example, to the ethylene-unsaturated carboxylic acid copolymer (b1), specifically, to a dispersion of the ethylene-unsaturated carboxylic acid copolymer (b1).

Examples of the base include inorganic bases such as sodium hydroxide and potassium hydroxide, and organic bases such as amines such as ammonia, triethylamine, triethanolamine, and dimethylethanolamine.

These bases may be used singly or in combination of two or more kinds thereof.

Examples of the bases preferably include inorganic bases, and more preferably include sodium hydroxide.

From the viewpoint of improving dispersion stability and the printability of the laminate (described below), the addition amount (that is, the amount of substance/valence) of the base is, for example, 5 mol or more, preferably 30 mol or more, and more preferably 50 mol or more, and is, for example, 100 mol or less and preferably 95 mol or less, with respect to 100 mol of the carboxy group in the ethylene-unsaturated carboxylic acid copolymer (b1).

When the addition amount of the base is the lower limit value or more, the dispersion stability of the aqueous dispersion is excellent and the printability of the laminate is excellent. When the addition amount of the base is the lower limit value or less, the viscosity of the aqueous dispersion is not too high, and workability is excellent.

After the base is added to the ethylene-unsaturated carboxylic acid copolymer (b1), the base and the ethylene-unsaturated carboxylic acid copolymer (b1) are preferably held at a predetermined temperature for a predetermined time. The retention temperature is, for example, 40°C or higher and preferably 50°C or higher, and is, for example, 190°C or lower and preferably 180°C or lower. The retention time is, for example, 30 minutes or longer and preferably 1 hour or longer, and is, for example, 12 hours or shorter and preferably 10 hours or shorter.

The ethylene-unsaturated carboxylic acid copolymer (b1) is neutralized by being held under the above conditions, and dispersion stability and the printability of the laminate (described below) can be improved.

When the ethylene-unsaturated carboxylic acid copolymer (B1) is a salt of the ethylene-unsaturated carboxylic acid copolymer (b1), the degree of neutralization thereof is, for example, 30% or more and preferably 50% or more, and is, for example, 100% or less and preferably 95% or less.

When the degree of neutralization is in the above range, excellent adhesion strength and blocking resistance can be obtained. The degree of neutralization is calculated in accordance with a method employed in Examples described below.

The infrared absorption spectrum of the sample is measured, and the absorption peak height at 1700 cm$^{-1}$ corresponding to the carboxy group is obtained (the peak height is designated as "a").

The sample is brought into contact with hydrochloric acid to remove metal ions in the resin (demetallization), thereby obtaining an acid copolymer having no ionic bond (intramolecular crosslinking). The infrared absorption spectrum of the sample of this acid copolymer is measured, and the absorption peak height at 1700 cm$^{-1}$ is obtained (the peak height is designated as "b").

The peak height "a" corresponds to the number of carboxyl groups that are not ionically bonded in the resin.

The peak height "b" corresponds to the number of all carboxyl groups in the resin.

Therefore, the degree of neutralization (%) is obtained by the following formula.

$$\text{Degree of neutralization (\%)} = 100 - 100 \times a/b$$

The weight average molecular weight of the ethylene-unsaturated carboxylic acid copolymer (b1) and/or the salt thereof (B1) is, for example, 5000 or more and preferably 10000 or more, and is, for example, 1000000 or less and preferably 500000 or less in terms of standard polystyrene measured by gel permeation chromatography (GPC).

The melting point of the ethylene-unsaturated carboxylic acid copolymer (b1) and/or the salt thereof (B1) as measured by differential scanning calorimetry (DSC) is, for example, 55°C or higher and preferably 65°C or higher, and is, for example, 110°C or lower and preferably 100°C or lower.

The solid content concentration of the ethylene-unsaturated carboxylic acid copolymer (b1) and/or the salt thereof (B1) in the dispersion of the ethylene-unsaturated carboxylic acid copolymer (b1) and/or the salt thereof (B1) is, for example, 10% by mass or more and preferably 20% by mass or more, and is, for example, 60% by mass or less and preferably 50% by mass or less.

The dispersion of the ethylene-unsaturated carboxylic acid copolymer (b1) and/or the salt thereof (B1) can also be obtained as a commercially available product.

These ethylene-unsaturated carboxylic acid copolymers and/or salts thereof (B1) may be used singly or in combination of two or more kinds thereof.

From the viewpoint of improving the frictional resistance retention rate of a laminate to be obtained, as the dispersion of the ethylene-unsaturated carboxylic acid copolymer (b1) and/or the salt thereof (B1), a mixture of an ethylene-acrylic acid copolymer (b1-1) and/or a salt thereof (B1-1) and an ethylene-methacrylic acid copolymer (b1-2) and/or a salt thereof (B1-2) is also a preferred embodiment. Although the detailed mechanism of the improvement of the frictional resistance retention rate is unknown, it is speculated that in the aqueous dispersion of the mixture, the polymer particles containing the polymer component are further refined, and the film forming performance is improved, which contributes to the improvement of the above physical properties.

<(Meth)acrylic Acid Ester Polymer (B2)>

The (meth)acrylic acid ester polymer (B2) has, as a structural unit, a structural unit obtained from at least a (meth)acrylic acid ester ((meth)acrylic acid ester monomer) (hereinafter, also referred to as "(meth)acrylic acid ester unit").

The (meth)acrylic acid ester is defined as an acrylic acid ester and/or a methacrylic acid ester.

Examples of the (meth)acrylic acid ester include (meth)acrylic acid esters having an alkyl moiety with 1 to 12 carbon atoms such as methyl (meth)acrylate, ethyl (meth)acrylate, propyl (meth)acrylate, n-butyl (meth)acrylate, iso-butyl (meth)acrylate, s-butyl (meth)acrylate, t-butyl (meth)acrylate, 2-ethylhexyl (meth)acrylate, and lauryl (meth)acrylate.

These (meth)acrylic acid esters may be used singly or in combination of two or more kinds thereof.

Examples of the (meth)acrylic acid ester preferably include methyl (meth)acrylate, ethyl (meth)acrylate, n-butyl (meth)acrylate, iso-butyl (meth)acrylate, t-butyl (meth)acrylate, and 2-ethylhexyl (meth)acrylate, more preferably include methyl (meth)acrylate and n-butyl (meth)acrylate, and further preferably include methyl methacrylate, n-butyl methacrylate, and butyl acrylate.

The polymer (B2) may contain, as an optional component, a polymerization unit obtained from a copolymerizable monomer copolymerizable with a (meth)acrylic acid ester.

Examples of the copolymerizable monomer include a functional group-containing vinyl monomer, an aromatic vinyl monomer, an N-substituted unsaturated carboxylic acid amide, a heterocyclic vinyl compound, a vinylidene halide compound, α-olefins, and dienes.

Examples of the functional group-containing vinyl monomer include a carboxy group-containing vinyl monomer, a hydroxyl group-containing vinyl monomer, an amino group-containing vinyl monomer, a glycidyl group-containing vinyl monomer, a cyano group-containing vinyl monomer, a sulfonic acid group-containing vinyl monomer and a salt thereof, an acetoacetoxy group-containing vinyl monomer, a phosphoric acid group-containing compound, an amide group-containing vinyl monomer, and vinyl esters.

Examples of the carboxy group-containing vinyl monomer include (meth)acrylic acid, maleic anhydride, maleic acid, fumaric acid, itaconic acid, and crotonic acid.

Examples of the hydroxyl group-containing vinyl monomer include 2-hydroxyethyl (meth)acrylate and 2-hydroxypropyl (meth)acrylate.

Examples of the amino group-containing vinyl monomer include 2-aminoethyl (meth)acrylate, 2-(N-methylamino)ethyl (meth)acrylate, and 2-(N,N-dimethylamino)ethyl (meth)acrylate.

Examples of the glycidyl group-containing vinyl monomer include glycidyl (meth)acrylate.

Examples of the cyano group-containing vinyl monomer include (meth)acrylonitrile.

Examples of the sulfonic acid group-containing vinyl monomer include allylsulfonic acid and methallylsulfonic acid. Examples of the salt thereof include alkali metal salts such as a sodium salt and a potassium salt of the sulfonic acid group-containing vinyl monomer, for example, an ammonium salt. Specific examples thereof include sodium allylsulfonate, sodium methallylsulfonate, and ammonium methallylsulfonate.

Examples of the acetoacetoxy group-containing vinyl monomer include acetoacetoxy ethyl (meth)acrylate.

Examples of the phosphoric acid group-containing compound include 2-methacryloyloxyethyl acid phosphate.

Examples of the amide group-containing vinyl monomer include (meth)acrylamide.

Examples of the vinyl esters include vinyl propionate (provided that vinyl acetate is excluded).

Examples of the aromatic vinyl monomer include styrene, $\alpha$-methylstyrene, and divinylbenzene.

Examples of the N-substituted unsaturated carboxylic acid amide include N-methylol (meth)acrylamide.

Examples of the heterocyclic vinyl compound include vinylpyrrolidone.

Examples of the vinylidene halide compound include vinylidene chloride and vinylidene fluoride.

Examples of the $\alpha$-olefins include ethylene and propylene.

Examples of the dienes include butadiene.

Examples of the copolymerizable monomer may include a crosslinkable vinyl monomer.

Examples of the crosslinkable vinyl monomer include compounds containing two or more vinyl groups such as methylenebis(meth)acrylamide, divinylbenzene, and polyethylene glycol chain-containing di(meth)acrylate.

These copolymerizable monomers may be used singly or in combination of two or more kinds thereof.

Examples of the copolymerizable monomer preferably include a functional group-containing vinyl monomer.

From the viewpoint of water resistance, the (meth)acrylic acid ester is preferably a methacrylic acid ester among an acrylic acid ester and a methacrylic acid ester.

Regarding the content ratio of the (meth)acrylic acid ester unit and a structural unit derived from other copolymerizable monomer (hereinafter, also described as "copolymerizable monomer unit") in the polymer (B2), when the total of the (meth)acrylic acid ester unit and the copolymerizable monomer unit is designated as 100% by mass, the (meth)acrylic acid ester unit is, for example, 50% by mass or more, preferably 70% by mass or more, and more preferably 77% by mass or more. The copolymerizable monomer unit is 50% by mass or less, preferably 30% by mass or less, and more preferably 23% by mass or less.

When the content ratio of the (meth)acrylic acid ester unit and the copolymerizable monomer unit is in the above range, excellent adhesion strength and blocking resistance can be obtained.

That is, the polymer (B2) may contain only a (meth)acrylic acid ester unit without containing a copolymerizable monomer unit, and may contain a (meth)acrylic acid ester component and a copolymerizable monomer component at the above-described ratio. The polymer (B2) preferably contains only a (meth)acrylic acid ester unit or contains a (meth)acrylic acid ester unit and a copolymerizable monomer unit at the above-described ratio.

When the polymer (B2) contains only a (meth)acrylic acid ester unit, the (meth)acrylic acid ester preferably contains only a (meth)acrylic acid ester having an alkyl moiety with 4 carbon atoms, or contains a combination of methyl (meth)acrylate and a (meth)acrylic acid ester having an alkyl moiety with 4 carbon atoms.

When the (meth)acrylic acid ester consists only a (meth)acrylic acid ester having an alkyl moiety with 4 carbon atoms, the (meth)acrylic acid ester particularly preferably contains only n-butyl methacrylate or contains a combination of n-butyl methacrylate and n-butyl acrylate.

When the (meth)acrylic acid ester is a combination of methyl (meth)acrylate and a (meth)acrylic acid ester having an alkyl moiety with 4 carbon atoms, the (meth)acrylic acid ester particularly preferably contains a combination of methyl methacrylate and n-butyl methacrylate or contains a combination of methyl methacrylate and n-butyl acrylate.

When the (meth)acrylic acid ester is such a combination, the glass transition temperature of the polymer (B2) can be adjusted in the range described below.

When the other copolymerizable monomer is a carboxy group-containing vinyl monomer, the ratio of the structural unit derived from the carboxy group-containing vinyl monomer in the polymer (B2) is, for example, 5% by mass or less and preferably 3% by mass or less from the viewpoint of production stability.

A method for producing the polymer (B2) is not particularly limited, and a known production method can be employed. Examples of the production method include a method in which water, a (meth)acrylic acid ester component, and a polymerization initiator are blended and the (meth)acrylic acid ester component is polymerized in water.

The polymerization initiator is not particularly limited, and examples thereof include:

hydrogen peroxide;

persulfates such as ammonium persulfate, potassium persulfate, and sodium persulfate;

organic peroxides such as cumene hydroperoxide, t-butyl hydroperoxide, benzoyl peroxide, t-butyl peroxy-2-ethylhexanoate, t-butyl peroxybenzoate, and lauroyl peroxide; and

azo compounds such as azobisisobutyronitrile, and

redox initiators by combination of these with metal ions such as iron ions and reducing agents such as sodium sulfoxylate, formaldehyde, sodium pyrosulfite, sodium bisulfite, L-ascorbic acid, and rongalite. These polymerization initiators may be used singly or in combination of two or more kinds thereof.

The blending ratio of the polymerization initiator is appropriately set, and is, for example, 0.1% by mass or more and is, for example, 5% by mass or less with respect to the total amount of the monomer components.

In the polymerization, as necessary, a molecular weight regulator can be blended.

Examples of the molecular weight regulator include mercaptans such as t-dodecyl mercaptan and n-dodecyl mercaptan, and allyl compounds such as allylsulfonic acid, methallylsulfonic acid, and sodium salts thereof. These molecular weight regulators may be used singly or in combination of two or more kinds thereof. The blending ratio of the molecular weight regulator is appropriately set.

In the case of polymerization under normal pressure, the polymerization temperature is, for example, 30°C or higher and preferably 50°C or higher, and is, for example, 95°C or lower and preferably 85°C or lower. The polymerization time is, for example, 1 hour or longer and preferably 2 hours or longer, and is, for example, 30 hours or shorter and preferably 20 hours or shorter.

In the production of the polymer (B2), from the viewpoint of improving production stability, as necessary, an emulsifier (surfactant) can be blended.

Examples of the emulsifier (surfactant) include an anionic surfactant, a nonionic surfactant, and a cationic surfactant.

Examples of the anionic surfactant include sodium dodecylbenzenesulfonate, sodium laurylsulfate, sodium alkyldiphenyl ether disulfonate, sodium alkylnaphthalenesulfonate, sodium dialkylsulfosuccinate, sodium stearate, potassium oleate, sodium dioctylsulfosuccinate, sodium polyoxyethylene alkyl ether sulfate, sodium polyoxyethylene alkyl ether sulfate, sodium polyoxyethylene alkylphenyl ether sulfate, sodium dialkylsulfosuccinate, sodium stearate, sodium oleate, and sodium t-octylphenoxyethoxypolyethoxyethylsulfate.

Examples of the nonionic surfactant include polyoxyethylene lauryl ether, polyoxyethylene octylphenyl ether, polyoxyethylene oleylphenyl ether, polyoxyethylene nonylphenyl ether, an oxyethylene-oxypropylene block copolymer, t-octylphenoxyethyl polyethoxyethanol, and nonylphenoxyethyl polyethoxyethanol.

Examples of the cationic surfactant include lauryl trimethylammonium chloride and stearyl trimethylammonium chloride.

These emulsifiers (surfactants) may be used singly or in combination of two or more kinds thereof.

Examples of the emulsifier (surfactant) preferably include an anionic surfactant and more preferably include sodium dodecylbenzenesulfonate.

The blending ratio of the emulsifier (surfactant) is not particularly limited, but is, for example, 0.02 parts by mass or more and, for example, 5 parts by mass or less with respect to 100 parts by mass of the total amount of the (meth)acrylic acid ester and any other copolymer monomer from the viewpoint of production stability.

In the production of the polymer (B2), from the viewpoint of improving production stability, for example, known additives such as a pH adjusting agent, metal ion sealing agents such as ethylenediaminetetraacetic acid and a salt thereof, and molecular weight regulators (chain transfer agents) such as mercaptans and low-molecular-weight halogen compounds can be blended at an appropriate ratio.

The weight average molecular weight of the polymer (B2) is, for example, 5000 or more and preferably 10000 or more, and is, for example, 1000000 or less and preferably 500000 or less in terms of standard polystyrene measured by gel permeation chromatography (GPC).

The glass transition temperature of the polymer (B2) is, for example, -28°C or higher and preferably -10°C or higher, and is, for example, 80°C or lower and preferably 60°C or lower. When the glass transition temperature of the polymer (B2) is in the above range, excellent adhesion strength and blocking resistance can be obtained.

Particularly, from the viewpoint of improving the adhesion strength of the aqueous dispersion, the glass transition temperature of the polymer (B2) is preferably 20°C or lower and further preferably 10°C or lower.

From the viewpoint of improving the blocking resistance of the aqueous dispersion, the glass transition temperature of the polymer (B2) is preferably higher than 0°C and further preferably 10°C or higher.

<Amide-based wax (C)>

The amide-based wax (C) is a compound having a long-chain fatty acid group and an amide group in the molecule.

Examples of the amide-based wax (C) include an amide compound obtained by reacting a monocarboxylic acid with a monoamine, or a monocarboxylic acid with a diamine, an amide compound obtained by reacting a monoamine with a polybasic acid, and an amide compound obtained by reacting a monocarboxylic acid, a polybasic acid, and a diamine.

The monoamine is preferably a monoamine having 5 or more carbon atoms, and examples thereof may include pentylamine, hexylamine, heptylamine, octylamine, nonylamine, decylamine, dodecylamine, stearylamine, cyclohexylamine, and benzylamine. These may be used singly or in combination of two or more kinds thereof. Among them, aliphatic monoamines having 10 to 20 carbon atoms are particularly preferred.

The monocarboxylic acid is preferably an aliphatic monocarboxylic acid having 5 or more carbon atoms and a hydroxycarboxylic acid, and examples thereof include valeric acid, caproic acid, caprylic acid, lauric acid, myristic acid, palmitic acid, stearic acid, oleic acid, linoleic acid, behenic acid, montanic acid, 12-hydroxystearic acid, and benzoic acid. These may be used singly or in combination of two or more kinds thereof. Among them, aliphatic monocarboxylic acids having 10 to 30 carbon atoms are particularly preferred.

Specific examples of the diamine include ethylenediamine, 1,3-diaminopropane, 1,4-diaminopropane, tetramethylenediamine, hexamethylenediamine, nonamethylenediamine, undecamethylenediamine, dodecamethylenediamine, meta-xylylenediamine, para-xylylenediamine, tolylenediamine, phenylenediamine, and isophoronediamine. These may be used singly or in combination of two or more kinds thereof. Among them, ethylenediamine is particularly preferred.

The polybasic acid is a carboxylic acid of a di- or more basic acid, and specific examples thereof include aliphatic dicarboxylic acids such as malonic acid, succinic acid, adipic acid, sebacic acid, pimelic acid, and azelaic acid, aromatic dicarboxylic acids such as phthalic acid, terephthalic acid, and isophthalic acid, and alicyclic dicarboxylic acids such as cyclohexanedicarboxylic acid and cyclohexylsuccinic acid. These may be used singly or in combination of two or more kinds thereof.

Specific examples of the amide-based wax (C) include N-oleyl palmitamide, ethylene bisoleic acid amide, and N-stearyl erucic acid amide.

<Other Components>

The aqueous dispersion of the present invention may contain a polymer (such as an ethylene-vinyl acetate copolymer) or an additive other than the components (A), (B), and (C) described above.

Examples of the additives include known additives such as a curing agent, a crosslinking agent, a film formation aid, an antifoaming agent, an anti-repelling agent, a leveling agent, a tackifier, a hardness imparting agent, an antiseptic, a thickener, an anti-freezing agent, a dispersant, an inorganic pigment, and an organic pigment, in addition to the above-described emulsifiers. These additives may be used singly or in combination of two or more kinds thereof. The blending ratio and the blending timing of the additive are appropriately set according to the purpose and use application.

<Aqueous Dispersion>

The aqueous dispersion of the present invention is a dispersion containing the polyolefin (A), the unsaturated carboxylic acid polymer (B), the amide-based wax (C), and water, and the content ratio of the components is appropriately set according to the purpose and use application.

When the total amount of the polyolefin (A) and the unsaturated carboxylic acid polymer (B) is designated as 100% by mass, the content of the polyolefin (A) in the aqueous dispersion of the present invention is, for example, 30% by mass or more, preferably 45% by mass or more, more preferably 50% by mass or more, and further preferably 60% by mass or more, and is, for example, 70% by mass or less, preferably 65% by mass or less, and more preferably 60% by mass or less.

When the total amount of the polyolefin (A) and the unsaturated carboxylic acid polymer (B) is designated as 100% by mass, the content of the unsaturated carboxylic acid polymer (B) in the aqueous dispersion of the present invention is, for example, 30% by mass or more, preferably 35% by mass or more, and more preferably 40% by mass or more, and is, for example, 70% by mass or less, preferably 55% by mass or less, more preferably 50% by mass or less, and further preferably 40% by mass or less.

When the content ratio of the polyolefin (A) and the unsaturated carboxylic acid polymer (B) is in the above range, excellent adhesion strength can be obtained, and the effect of adding the amide-based wax is easily exhibited quickly.

The amount of the amide-based wax (C) contained in the aqueous dispersion of the present invention is 0.15 to 3.0 parts by mass, preferably 0.15 to 2.5 parts by mass, and more preferably 0.2 to 2.0 parts by mass with respect to 100 parts by mass of the component (A) + the component (B) of the aqueous dispersion.

The solid content of the aqueous dispersion is a component other than water and an organic solvent (which may be contained as an optional component) among components contained in the aqueous dispersion of the present invention.

<Method for Producing Aqueous Dispersion>

Examples of the method for producing the aqueous dispersion of the present invention include a method in which the above-described components are mixed at the above predetermined ratio and emulsified at one time and a method in which individual components are emulsified and then mixed at the above predetermined ratio.

The aqueous dispersion of the present invention may contain the above-described polymer components (that is, the polyolefin (A) and the component (B)) as a non-particulate polymer or as a particulate polymer. Preferably, the polymer components are contained as a particulate polymer.

The weight average particle diameter (measurement method: light scattering measurement) of the particles is, for example, 10 nm or more, and is, for example, 10 $\mu$m or less and preferably 5 $\mu$m or less.

When the polymer components are contained as a particulate polymer in the aqueous dispersion, the polymer components may be single particles of each polymer, or may be composite particles including two or more kinds of polymers.

For example, the ethylene-unsaturated carboxylic acid copolymer (b1) and/or the salt thereof (B1) and the (meth)acrylic acid ester polymer (B2) may form composite particles.

A method for producing such composite particles is not particularly limited, and a known production method can be employed.

The form of the composite particles is not particularly limited, and examples thereof include a core/shell structure, a composite structure, a localized structure, a daruma-shaped structure, an octopus-shaped structure, a raspberry-shaped structure, a multiparticle composite structure, and an IPN structure.

The solid content concentration of the aqueous dispersion of the present invention is, for example, 10% by mass or more and preferably 20% by mass or more, and is, for example, 60% by mass or less and preferably 50% by mass or less.

The pH of the aqueous dispersion of the present invention is, for example, 7 or more, and is, for example, 11 or less and preferably 10 or less.

The aqueous dispersion of the present invention can exhibit low frictional properties quickly after being applied to a substrate.

When the aqueous dispersion of the present invention is used for forming an adhesive layer (heat seal layer) of a laminate, a laminate having excellent adhesion strength can be obtained.

Therefore, the aqueous dispersion can be suitably used as an adhesive composition for forming an adhesive layer in a laminate including a substrate and an adhesive layer laminated on at least one side surface of the substrate.

<Laminate>

A laminate of the present invention includes a substrate and an adhesive layer laminated on at least a part of at least a surface of the substrate.

Examples of the substrate include a resin substrate, a metal substrate, and a composite substrate.

Examples of the resin substrate include plastic films, containers, and cups made of plastic materials such as cellophane, polyethylene, an ethylene-vinyl acetate copolymer, an ionomer, polypropylene, polyamide (nylon), polyester, polyvinyl chloride, polyvinylidene chloride, polyvinyl alcohol, an ethylene-vinyl alcohol copolymer, polycarbonate, polystyrene, and a polyacrylonitrile copolymer.

Examples of the metal substrate include a metal plate, a metal foil, a container, and a cup, and examples of the metal include aluminum, gold, silver, copper, nickel, zinc, titanium, cobalt, indium, and chromium.

Examples of the composite substrate include vapor deposition films in which metals (such as aluminum, gold, silver, copper, nickel, zinc, titanium, cobalt, indium, and chromium) or oxides thereof (such as aluminum oxide and silicon oxide) are vapor-deposited on the plastic films.

Further, examples of the substrate include paper and nonwoven fabric.

These substrates may be used singly or in combination of two or more kinds thereof.

Examples of the substrate preferably include a metal substrate, more preferably include a metal substrate made of aluminum, and further preferably include a metal foil made of aluminum.

The substrate may be surface-treated as necessary. Examples of the surface treatment include an ink (solvent-based or water-based) coating treatment, a plating treatment, a coupling treatment, and a vacuum plasma treatment, preferably include an ink coating treatment, and more preferably include a solvent-based ink coating treatment.

The adhesive layer is a dried product of the above-described aqueous dispersion, and can be obtained by applying (coating) the above-described aqueous dispersion to one side surface of a substrate and drying the aqueous dispersion.

The aqueous dispersion may be applied to the entire surface of the one side surface of the substrate, or when the aqueous dispersion is used for forming a heat seal layer, it is sufficient that the aqueous dispersion is applied to a portion of the one side surface of the substrate where the laminated laminate and another material are heat-sealed (bonded).

A method for applying (coating) the aqueous dispersion is not particularly limited, and for example, known methods such as gravure roll coating, three-roll coating, dip coating, and spray coating are employed.

When the coating film of the applied aqueous dispersion is dried, the drying temperature is, for example, 100 to 200°C, and the drying time is, for example, 10 seconds to 30 minutes.

In order to improve adhesion between the substrate and the adhesive layer, before application and drying, the substrate may be coated with a primer (such as titanate or polyethyleneimine) or may be subjected to a pretreatment such as a corona discharge treatment or a chemical conversion treatment.

According to such a laminate, since the above-described aqueous dispersion is used for a heat seal layer (adhesive layer), excellent adhesion strength and low frictional properties can be obtained. Since the aqueous dispersion of the present invention is not a dispersion in which particles are dispersed in an organic solvent such as ethyl acetate or toluene, the amount of the organic solvent remaining in the adhesive layer can be set to preferably 100 ppm or less and more preferably 10 ppm or less.

Therefore, the laminate of the present invention is used as a material for heat sealing in various industrial fields.

At the time of heat sealing, the substrate and the adherend layer are bonded to each other with the adhesive layer interposed therebetween.

The adherend layer is a material to which the laminate is bonded, and examples thereof include a resin material, a metal material, and a composite material.

Examples of the resin material include plastic films made of plastic materials such as cellophane, polyethylene, an ethylene-vinyl acetate copolymer, an ionomer, polypropylene, polyamide (nylon), polyester, polyvinyl chloride, polyvinylidene chloride, polyvinyl alcohol, an ethylene-vinyl alcohol copolymer, polycarbonate, polystyrene, and a polyacrylonitrile copolymer.

Examples of the metal material include a metal plate and a metal foil, and examples of the metal include aluminum, gold, silver, copper, nickel, zinc, titanium, cobalt, indium, and chromium.

Examples of the composite material include vapor deposition films in which metals (such as aluminum, gold, silver, copper, nickel, zinc, titanium, cobalt, indium, and chromium) or oxides thereof (such as aluminum oxide and silicon oxide) are vapor-deposited on the plastic films.

Further, examples of the adherend layer include paper and nonwoven fabric.

The adherend layer may be surface-treated as necessary. Examples of the surface treatment include an ink (solvent-based or water-based) coating treatment, a plating treatment, a coupling treatment, and a vacuum plasma treatment, preferably include an ink coating treatment, and more preferably include a solvent-based ink coating treatment.

Examples of the adherend layer also include a laminate including a substrate and an adhesive layer.

These adherend layers may be used singly or in combination of two or more kinds thereof.

From the viewpoint of adhesion strength and adhesion easiness, preferred examples of the adherend layer include plastic films made of polyvinyl chloride and polyvinylidene chloride.

A method for heat-sealing the substrate and the adherend layer is not particularly limited, and a known method is employed. Examples thereof include a method in which a substrate and an adherend layer are laminated with an adhesive layer interposed therebetween and then heated and pressurized. When the laminate of the present invention is used as the adherend layer, the adhesive layers are bonded to each other, and two substrates are laminated with these two adhesive layers interposed therebetween, and then heated and pressurized.

The heating temperature is, for example, 80°C or higher and preferably 100°C or higher, and is, for example, 250°C or lower and preferably 200°C or lower. The pressure is, for example, 50 kPa or more and preferably 100 kPa or more, and is, for example, 500 kPa or less and preferably 300 kPa or less.

As the result, the substrate and the adherend layer are heat-sealed (thermocompression-bonded).

The adhesion strength between the substrate and the adherend layer can be measured using the peeling strength between the substrate and the adherend layer.

The laminate in which the adherend layer is laminated on the one side surface of the adhesive layer in this manner is included in the present invention regardless of the heat-sealed state (that is, before and after heat sealing).

Since such a laminate is obtained using the above-described aqueous dispersion, the laminate is excellent in low frictional properties.

Further, such a laminate has excellent adhesion strength.

Therefore, the laminate is suitably used as a packaging material in various industrial fields.

An object to be packaged using the laminate is not particularly limited, and examples thereof include various industrial products such as confectionery, food, daily necessities, pharmaceutical products, and paper.

In particular, in the fields of pharmaceutical products and food packaging, effects such as an effect of suppressing alteration of a packaging material or an object to be packaged at the time of heat sealing and an effect of improving productivity and reducing power consumption due to an increase in filling rate are expected. Since an adhesive composition for forming the adhesive layer is an aqueous dispersion, there is a feature that a load on the environment is small.

Examples

Hereinafter, the present invention will be specifically described by means of Examples and Comparative Examples; however, the present invention is not limited thereto.

[Evaluation Method]

Aqueous dispersions and laminates produced, for example, in Examples were evaluated by the following methods.

<Particle Diameter>

As for the particle diameter of the solid content in the aqueous dispersion produced, for example, in Examples, the particle diameter of each dispersion was measured using a laser diffraction/scattering type particle size distribution measuring apparatus Microtrac series.

<Dynamic Frictional Resistance>

The dynamic friction coefficient (COF) of the coating film included in the laminate produced, for example, in Examples was measured by moving the coating film surfaces at a speed of 100 mm/min using a friction measuring machine TR-2 (manufactured by Toyo Seiki Seisaku-sho, Ltd.).

The dynamic friction coefficient retention rate was calculated by the following formula.

```
Dynamic friction coefficient retention rate (%) =

(Dynamic friction coefficient of dried coating film after

elapse of a predetermined time from production of

laminate/Dynamic friction coefficient of dried coating film

immediately after production of laminate) × 100
```

<Heat Sealability>

The laminate produced, for example, in Examples was allowed to stand at room temperature all day and night, then cut into a strip shape having a width of 15 mm, and the dried coating films were superposed on each other and thermally sealed under the conditions of a temperature of 110°C and a pressure of 2 kgf/cm$^2$ for 0.5 seconds to obtain a test piece. The 180 degree peeling strength was measured using the obtained test piece under the condition of a tensile speed of 200 mm/sec.

[Example 1]

<Production of Aqueous Dispersion>

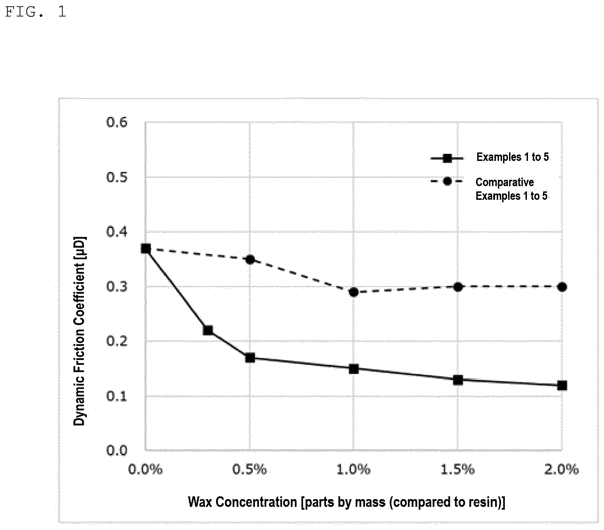

Using a kneading apparatus described in Fig. 1 of JP S63-46273 A, a high-pressure low-density polyethylene [manufactured by DOW-MITSUI POLYCHEMICALS CO., LTD., trade name: MIRASON FL60, hereinafter, also described as "LDPE"] as the polyolefin (A), an ethylene-acrylic acid copolymer [manufactured by DOW-MITSUI POLYCHEMICALS CO., LTD., trade name: NUCREL (ethylene content ratio: 72% by mass), hereinafter, also described as "EAA"] as the unsaturated carboxylic acid polymer (B) were charged in a hopper of the kneading apparatus at a weight ratio of 5/5 and melt-kneaded. During the melt-kneading, a potassium hydroxide aqueous solution was charged into the kneader so that the degree of neutralization of the acrylic acid unit in the ethylene-acrylic acid copolymer was 50% to neutralize the acrylic acid component. Thereafter, water and N-oleyl palmitamide, which is the amide-based wax, as the wax in an amount of 0.3 parts by mass with respect to 100 parts by mass of the total amount of the resin components were supplied into the kneader, the mixture in the kneader was then cooled to room temperature, and finally, water was further added, thereby obtaining an aqueous dispersion having a solid content concentration of 40% by mass.

The particle diameter of the solid content in the obtained aqueous dispersion was 2 μm.

<Production of Laminate>

The obtained aqueous dispersion was adjusted to have a solid content concentration of 24% by adding deionized water, and then applied to the entire surface of one surface of an aluminum foil (thickness: 40 μm) with a wire bar so that the coating amount was 3 g/m$^2$, and dried at 120°C for 30 seconds to obtain a laminate including a soft aluminum foil and a dried coating film of the aqueous dispersion.

[Examples 2 to 5]

Three aqueous dispersions (all of the particle diameters: 2 μm) of Examples 2 to 5 were obtained by the same operations as those in Example 1, except that the amount of the amide-based wax at the time of producing the aqueous dispersion was changed to 0.5 parts by mass, 1.0 part by mass, 1.5 parts by mass, and 2.0 parts by mass, respectively, with respect to 100 parts by mass of the total amount of the resin components. Next, respective laminates of Examples 2 to 5 were obtained using these aqueous dispersions in the same manner as in Example 1.

The measurement results of the dynamic friction coefficients of the laminates of Examples 1 to 5 are shown in Figs. 1 to 3, and the evaluation result of the heat sealability of Example 1 is shown in Table 1.

[Comparative Example 1]

An aqueous dispersion of Comparative Example 1 was obtained in the same manner as in Example 1, except that wax was not added. A laminate of Comparative Example 1 was produced using the aqueous dispersion in the same manner as the method for producing a laminate of Example 1.

The measurement result of the dynamic friction coefficient of the laminate is shown in Fig. 1.

[Example 6]

An aqueous dispersion of Example 6 was obtained in the same manner as in Example 1, except that wax was changed to ethylene bisoleic acid amide that is the amide-based wax, and the concentration of the wax was set to only 0.3 parts by mass with respect to 100 parts by mass of the total amount of the resin components. Next, a laminate of Example 6 was obtained using the aqueous dispersion in the same manner as in Example 1. The particle diameter of the solid content in the aqueous dispersion was 2 μm.

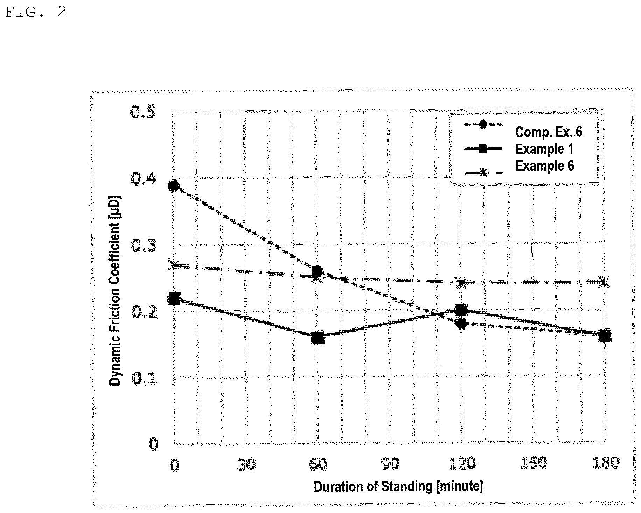

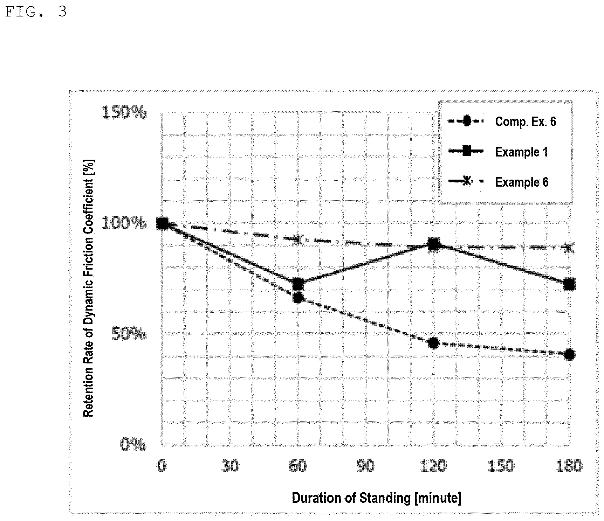

The measurement result of the dynamic friction coefficient of the laminate is shown in Figs. 2 and 3.

[Comparative Examples 2 to 5]

Aqueous dispersions of Comparative Examples 2 to 5 were obtained in the same manner as in Example 1, except that the wax was changed to polyethylene wax (manufactured by Mitsui Chemicals, Inc., trade name: W200), and the concentration of the wax was set to 0.5 parts by mass, 1.0 part by mass, 1.5 parts by mass, and 2.0 parts by mass, respectively, with respect to the total amount of the resin components. Next, laminates of Comparative Examples 2 to 5 were obtained using these aqueous dispersions in the same manner as in Example 1.

The particle diameters of the solid contents in the aqueous dispersions of Comparative Examples 2 to 5 were all 2 μm. The measurement result of the dynamic friction coefficient of the laminate is shown in Fig. 1.

[Comparative Example 6]

An ethylene-methacrylic acid copolymer [manufactured by DOW-MITSUI POLYCHEMICALS CO., LTD., trade name: NUCREL (ethylene content ratio: 85% by mass), hereinafter, also described as "EMAA"], potassium hydroxide, water, and N-oleyl palmitamide (0.3% by mass of the total amount of the resin components) were charged into an autoclave, and stirred under a temperature condition of 130°C to 180°C and a pressurized condition for 4 hours to 8 hours. Thereafter, the dispersion was cooled to room temperature to obtain an aqueous dispersion of Comparative Example 6 in a satisfactory dispersion state with a solid content concentration of 42% by mass. Next, a laminate of Comparative Example 6 was obtained using the aqueous dispersion. The particle diameter of the solid content in the aqueous dispersion was 2.0 $\mu$m.

The measurement results of the dynamic friction coefficients of the laminates are shown in Figs. 2 and 3, and the evaluation result of the heat sealability is shown in Table 1.

[Table 1]

| Sample | Strength at time of HS at 110°C [N/15 mm] | Determination |
|---|---|---|
| Comparative Example 6 | 3.8 | OK |
| Example 1 | 4.7 | OK |

The determination was "OK" when the heat-seal strength was 2.5 N/15 mm or more.

[Examples 7 to 16 and Comparative Examples 7 and 8]

Aqueous dispersions of Examples 7 to 16 and Comparative Examples 7 and 8 were prepared in the same manner as in Example 1, except that the composition of the aqueous dispersion was changed to the composition in Table 2 below. Next, respective laminates of Examples 7 to 16 and Comparative Examples 7 and 8 were obtained using these aqueous dispersions. In Table 2, Evolue SP0540 manufactured by Prime Polymer Co., Ltd. as 1-LDPE, TAFMER DF7350 manufactured by Mitsui Chemicals, Inc. as the ethylene-butene copolymer, NUCREL (ethylene content ratio: 72% by mass) manufactured by DOW-MITSUI POLYCHEMICALS CO., LTD. as the ethylene-acrylic acid copolymer, NUCREL (ethylene content ratio: 91% by mass) manufactured by DOW-MITSUI POLYCHEMICALS CO., LTD. as the ethylene-methacrylic acid copolymer 1, NUCREL (ethylene content ratio: 85% by mass) manufactured by DOW-MITSUI POLYCHEMICALS CO., LTD. as the ethylene-methacrylic acid copolymer 2 were used.

[Table 2]

Table 2

| | Resin composition ratio [%] of emulsion | | | | | |
|---|---|---|---|---|---|---|
| | Polyolefin-based resin | | | Ethylene-unsaturated carboxylic acid copolymer | | |
| | LDPE | l-LDPE | Ethylene-butene copolymer | Ethylene-acrylic acid copolymer | Ethylene-methacrylic acid copolymer 1 | Ethylene-methacrylic acid copolymer 2 |
| Example 1 | 50 | 0 | 0 | 50 | 0 | 0 |
| Example 2 | 50 | 0 | 0 | 50 | 0 | 0 |
| Example 3 | 50 | 0 | 0 | 50 | 0 | 0 |
| Example 4 | 50 | 0 | 0 | 50 | 0 | 0 |
| Example 5 | 50 | 0 | 0 | 50 | 0 | 0 |
| Example 6 | 50 | 0 | 0 | 50 | 0 | 0 |
| Example 7 | 0 | 50 | 0 | 50 | 0 | 0 |
| Example 8 | 0 | 40 | 10 | 50 | 0 | 0 |
| Example 9 | 0 | 40 | 10 | 50 | 0 | 0 |
| Example 10 | 0 | 40 | 10 | 50 | 0 | 0 |
| Example 11 | 0 | 40 | 10 | 50 | 0 | 0 |
| Example 12 | 0 | 30 | 20 | 50 | 0 | 0 |
| Example 13 | 0 | 20 | 30 | 50 | 0 | 0 |
| Example 14 | 0 | 10 | 40 | 50 | 0 | 0 |
| Example 15 | 0 | 40 | 10 | 40 | 10 | 0 |
| Example 16 | 0 | 20 | 10 | 40 | 30 | 0 |
| Comparative Example 1 | 50 | 0 | 0 | 50 | 0 | 0 |
| Comparative Example 2 | 50 | 0 | 0 | 50 | 0 | 0 |
| Comparative Example 3 | 50 | 0 | 0 | 50 | 0 | 0 |
| Comparative Example 4 | 50 | 0 | 0 | 50 | 0 | 0 |
| Comparative Example 5 | 50 | 0 | 0 | 50 | 0 | 0 |
| Comparative Example 6 | 0 | 0 | 0 | 0 | 0 | 100 |
| Comparative Example 7 | 0 | 0 | 0 | 0 | 0 | 100 |
| Comparative Example 8 | 0 | 0 | 0 | 100 | 0 | 0 |

Table 2 (continued)

| | | Wax component | | Friction performance | | | Heat-seal strength | Comprehensive determination |
|---|---|---|---|---|---|---|---|---|
| | Compound name | Wax concentration (compared to resin component) [parts by mass] | Initial COF | COF after 3 hours | COF retention rate [%] after 3 hours | 100°C HS strength [N/15 mm] | |
| Example 1 | N-oleyl palmitamide | 0.3 | 0.22 | 0.16 | 72.7% | 0.8 | OK |
| Example 2 | N-oleyl palmitamide | 0.5 | 0.17 | 0.13 | 76.5% | 0.8 | OK |
| Example 3 | N-oleyl palmitamide | 1.0 | 0.15 | 0.12 | 80.0% | 0.8 | OK |
| Example 4 | N-oleyl palmitamide | 1.5 | 0.13 | 0.1 | 76.9% | 0.7 | OK |
| Example 5 | N-oleyl palmitamide | 2.0 | 0.12 | 0.1 | 83.3% | 0.6 | OK |
| Example 6 | Ethylene bisoleic acid amide | 0.3 | 0.27 | 0.24 | 88.9% | 0.5 | OK |
| Example 7 | N-oleyl palmitamide | 2.0 | 0.14 | 0.11 | 78.6% | 0.5 | OK |
| Example 8 | N-oleyl palmitamide | 0.5 | 0.19 | 0.15 | 78.9% | 2.6 | OK |
| Example 9 | N-oleyl palmitamide | 1.0 | 0.16 | 0.11 | 68.8% | 2.4 | OK |
| Example 10 | N-oleyl palmitamide | 2.0 | 0.13 | 0.1 | 76.9% | 2.3 | OK |
| Example 11 | N-oleyl palmitamide | 2.5 | 0.12 | 0.1 | 83.3% | 2.2 | OK |
| Example 12 | N-oleyl palmitamide | 2.0 | 0.12 | 0.1 | 83.3% | 2.2 | OK |
| Example 13 | N-oleyl palmitamide | 2.0 | 0.13 | 0.1 | 76.9% | 2.5 | OK |
| Example 14 | N-oleyl palmitamide | 2.0 | 0.14 | 0.1 | 71.4% | 2.7 | OK |
| Example 15 | N-oleyl palmitamide | 2.0 | 0.14 | 0.12 | 85.7% | 2.3 | OK |
| Example 16 | N-oleyl palmitamide | 2.0 | 0.14 | 0.12 | 85.7% | 1.6 | OK |
| Comparative Example 1 | - | - | 0.37 | - | - | - | NG |
| Comparative Example 2 | PE-Wax | 0.5 | 0.35 | - | - | - | NG |
| Comparative Example 3 | PE-Wax | 1.0 | 0.29 | - | - | - | NG |
| Comparative Example 4 | PE-Wax | 1.5 | 0.3 | - | - | - | NG |
| Comparative Example 5 | PE-Wax | 2.0 | 0.3 | - | - | - | NG |
| Comparative Example 6 | N-oleyl palmitamide | 0.3 | 0.39 | 0.16 | 41.0% | 2.5 | NG |
| Comparative Example 7 | N-oleyl palmitamide | 1.0 | 0.3 | 0.09 | 30.0% | 2.4 | NG |
| Comparative Example 8 | N-oleyl palmitamide | 1.0 | 0.4 | 0.12 | 30.0% | 4.5 | NG |

The dynamic friction coefficient immediately after the production of the laminate (initial COF), the dynamic friction coefficient after 3 hours from the production of the laminate (COF after 3 hours), the dynamic friction coefficient retention rate after 3 hours from the production of the laminate (COF retention rate after 3 hours), and the heat-seal strength of each obtained laminate were obtained in the same manner as in Example 1. The results are shown in Table 2. As the comprehensive determination, a case where the initial COF is 0.28 or less and the COF retention rate after 3 hours is 50% or more was determined as "OK" and the other cases were determined as "NG".

<Discussion>

Fig. 1 shows the influence on the addition amounts of a polyethylene-based wax and an amide-based wax and a dynamic friction coefficient (immediately after coating). From Fig. 1, it is found that the aqueous dispersion of Example 1 using the amide-based wax as the wax has a smaller dynamic friction coefficient than the aqueous dispersion of Comparative Example 6 using polyethylene-based wax as the wax.

Fig. 2 shows relations between a duration of standing after coating with an aqueous dispersion and a dynamic friction coefficient. From Fig. 2, it is found that the aqueous dispersions of Examples 1 and 6 (resin component: LDPE/EAA = 5/5 (wax amount: 0.3 parts by mass)) exhibited a low dynamic friction coefficient within a short time after coating as compared with the aqueous dispersion of Comparative Example 6 (resin component: EMAA = 100% (wax amount: 0.3 parts by mass).

Fig. 3 shows relations between a duration of standing after coating with an aqueous dispersion and a retention rate of a dynamic friction coefficient. From Fig. 3, the dynamic friction coefficient retention rate after 3 hours from coating (that is, from the production of the laminate) of the dried coating films formed from the aqueous dispersions of Examples 1 and 6 was about 80%. On the other hand, it is found that the retention rate of the dried coating film formed from the aqueous dispersion of Comparative Example 6 is 40% and the dynamic friction coefficient greatly varies depending on the duration of standing after coating.

From the results of the heat-seal strength of Examples 8 to 16 in Table 2, it is found that the heat-seal strength at a low temperature can be improved by using two kinds of polyolefins (A) in combination in the present invention.


**Claims**

1. An aqueous dispersion comprising a polyolefin (A), an unsaturated carboxylic acid polymer (B), an amide-based wax (C), and water.

2. The aqueous dispersion according to claim 1, wherein a concentration of the amide-based wax (C) is 0.15 to 3.0 parts by mass with respect to 100 parts by mass of the component (A) + the component (B) of the aqueous dispersion.

3. The aqueous dispersion according to claim 1 or 2, wherein the unsaturated carboxylic acid polymer (B) is at least one selected from the group consisting of an ethylene-unsaturated carboxylic acid copolymer (b1) and/or a salt thereof (B1), and a (meth)acrylic acid ester polymer (B2).

4. The aqueous dispersion according to any one of claims 1 to 3, wherein the unsaturated carboxylic acid polymer (B) is composite particles comprising the ethylene-unsaturated carboxylic acid copolymer (b1) and/or the salt thereof (B1) and the acrylic acid ester polymer (B2).

5. A laminate comprising a substrate, and an adhesive layer laminated on at least a part of at least a surface of the substrate, wherein the adhesive layer is formed of a dried product of the aqueous dispersion according to any one of claims 1 to 4.

6. The laminate according to claim 5, further comprising an adherend layer laminated on a surface of the adhesive layer opposite to the substrate side.

7. The laminate according to claim 5 or 6, wherein the substrate is formed of aluminum.

FIG. 1

FIG. 2

FIG. 3

## INTERNATIONAL SEARCH REPORT

International application No.

PCT/JP2020/044993

### A. CLASSIFICATION OF SUBJECT MATTER

B32B 27/18(2006.01)i; B32B 27/32(2006.01)i; C08K 5/20(2006.01)i; C08L 23/00(2006.01)i

FI: C08L23/00; C08K5/20; B32B27/32 101; B32B27/18 Z

According to International Patent Classification (IPC) or to both national classification and IPC

### B. FIELDS SEARCHED

Minimum documentation searched (classification system followed by classification symbols)

C08K3/00-13/08; C08L1/00-101/14; C08J3/00-3/28; C09D1/00-10/00; C09D101/00-201/10; B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 09-012795 A (NIPPON PETROCHEMICALS CO., LTD.) 14 January 1997 (1997-01-14) claims 1-3, paragraphs [0039], [0041]-[0042], [0046]-[0048] | 5-7<br>1-4 |
| Y | JP 2011-501764 A (DOW GLOBAL TECHNOLOGIES INCORPORATED) 13 January 2011 (2011-01-13) claims 1-2, 10-11, 31, paragraphs [0031]-[0035], [0071]-[0073], [0081], [0099], [0128], examples | 1-7 |
| Y | JP 2006-131882 A (UNITIKA LTD.) 25 May 2006 (2006-05-25) claims 1, 3, paragraphs [0004], [0020]-[0021], examples | 1-7 |

☒ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 February 2021 (01.02.2021) | 09 February 2021 (09.02.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

| International application No. |
| --- |
| PCT/JP2020/044993 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2007-262211 A (UNITIKA LTD.) 11 October 2007 (2007-10-11) claims 1, 4, paragraphs [0006], [0022]-[0024], examples | 1-7 |
| Y | JP 62-011543 A (MITSUI SEKIYU KAGAKU KOGYO KABUSHIKI KAISHA) 20 January 1987 (1987-01-20) claims, page 4, upper left column, line 4 to upper right column, line 7, page 4, lower left column, line 17 to lower right column, line 6, page 7, upper left column, line 18 to upper right column, line 12, examples 1-5, 9-10 | 1-7 |
| Y A | JP 2000-007860 A (SUMITOMO SEIKA CHEMICALS CO., LTD.) 11 January 2000 (2000-01-11) paragraph [0014] | 4 1-3, 5-7 |
| A | JP 2019-156887 A (UNITIKA LTD.) 19 September 2019 (2019-09-19) claims 1-6, examples | 1-7 |
| A | JP 2019-123791 A (UMG ABS, LTD.) 25 July 2019 (2019-07-25) claims 1-5, paragraph [0020], examples | 1-7 |

Form PCT/ISA/210 (continuation of second sheet) (January 2015)

International application No.

PCT/JP2020/044993

| Patent Documents referred in the Report | Publication Date | Patent Family | Publication Date |
|---|---|---|---|
| JP 09-012796 A | 14 Jan. 1997 | (Family: none) | |
| JP 2011-501764 A | 13 Jan. 2011 | US 2010/0255207 A1 claims 1, 10-11, 31, paragraphs [0033]-[0037], [0084]-[0086], [0094], [0112], [0141], examples US 2013/0101847 A1 WO 2009/045731 A2 EP 2197942 A2 EP 2543393 A2 EP 2543690 A2 EP 2543691 A2 EP 2543763 A2 EP 2543764 A2 AR 068269 A1 CN 101878250 A TW 200930748 A | |
| JP 2006-131882 A | 25 May 2006 | (Family: none) | |
| JP 2007-262211 A | 11 Oct. 2007 | (Family: none) | |
| JP 62-011543 A | 20 Jan. 1937 | (Family: none) | |
| JP 2000-007860 A | 11 Jan. 2000 | (Family: none) | |
| JP 2019-156887 A | 19 Sep. 2019 | (Family: none) | |
| JP 2019-123791 A | 25 Jul. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018142997 A
- JP H7008933 B
- JP H5039975 B
- JP H4030970 B
- JP S42000275 B
- JP S42023085 B
- JP S45029909 B
- JP S51062890 A
- JP S6346273 A